# EUROPÄISCHE PATENTSCHRIFT

(11) **EP 0 444 226 B1**
(45) Veröffentlichungstag und Bekanntmachung des Hinweises auf die Patenterteilung: **13.04.1994**
(21) Anmeldenummer: 90103841.4
(22) Anmeldetag: 28.02.1990
(51) Int. Cl.: G01B 7/00, G01B 7/02

(54) **Verfahren und Vorrichtung zum Abgleich einer Wegaufnehmer-Messkette nach dem Wirbelstrom-Messverfahren**
Method and apparatus for adjusting an Eddy-current displacement transducer
Appareil et procédé pour ajuster un transducteur de déplacement utilisant le courant de Foucault

(43) Veröffentlichungstag der Anmeldung: 04.09.1991
(73) Patentinhaber: CARL SCHENCK AG, D-64273 Darmstadt (DE)
(72) Erfinder: Milz, Udo, Dr., D-6110 Dieburg (DE); Birnbaum, Erich, Dipl.-Ing., D-6231 Schwalbach (DE)
(74) Vertreter: Brandt, Ernst-Ulrich, Dipl.-Phys., Dipl.-Ing.

(56) Entgegenhaltungen:
- EP-A- 0 169 633
- EP-A- 0 203 536
- US-A- 2 933 677
- US-A- 3 883 796
- US-A- 3 922 599

## Beschreibung

Die Erfindung betrifft ein Verfahren zum Abgleich einer Wegaufnehmer-Meßkette nach dem Wirbelstrom-Meßverfahren und eine Vorrichtung zur Durchführung des Verfahrens zum Abgleich einer Wegaufnehmer-Meßkette nach dem Wirbelstrom-Meßverfahren gemäß dem Oberbegriff des Patentanspruchs 3.

Zur berührungslosen Messung von Weg oder Schwingungen wird beispielsweise das Wirbelstrom-Meßverfahren eingesetzt. Ein Wirbelstromaufnehmer besteht im wesentlichen aus einer in einem Gehäuse angeordneten Aufnehmerspule, die von einer Oszillatorschaltung mit einem hochfrequenten Wechselstrom gespeist wird. Um die Aufnehmerspule bildet sich daher ein magnetisches Feld aus, welches beim Einbringen eines leitfähigen Materials in dieses hochfrequente Feld Wirbelströme im leitfähigen Material induziert. Die Wirbelströme sind umso stärker, je kleiner der Abstand zwischen leitfähigem Material bzw. Meßobjekt und der Aufnehmerspule ist. Diese Wirbelströme haben zur Folge, daß die Impedanz der Aufnehmerspule verändert wird. Diese Veränderungen werden meßtechnisch ausgewertet und ergeben ein abstandsabhängiges Ausganssignal.

Da man für Schwingungsmessungen sehr hohe Anforderungen an die Linearität, d. h. einer linearen Abhängigkeit zwischen Abstandsänderung des Meßobjekts zur Aufnehmerspule und der Ausgangsspannung, und an die Konstanz des Übertragungsfaktors der Wegaufnehmer-Meßkette nach dem Wirbelstrom-Meßverfahren stellt, muß die Wegaufnehmer-Meßkette abgeglichen werden.

Bei einem bekannten Verfahren zum Abgleich einer Wegaufnehmer-Meßkette nach dem Wirbelstrom-Meßverfahren erfolgt der Abgleich durch Kürzen des Verbindungskabels, welches den Aufnehmer mit der Oszillatorschaltung verbindet. Die Kapazität des Verbindungskabels bildet selbst einen Teil des Oszillatorschwingkreises.Dieses Verfahren zum Abgleich einer Wegaufnehmer-Meßkette ist aufwendig und bei vorgegebener Kabellänge nicht immer durchführbar (Firmendruckschrift "VIBROSENSORS C1334, S. 4-5, Januar 1988").

Bei einem weiteren Verfahren zum Abgleich einer Wegaufnehmer-Meßkette nach dem Wirbelstrom-Meßverfahren erfolgt der Abgleich durch Verändern von Kondensatoren und/oder Widerständen im Oszillatorschwingkreis. Dieses Verfahren zum Abgleich findet vor allem bei Wirbelstromaufnehmern Anwendung, bei denen Aufnehmerspule und Oszillatorschwingkreis zusammen im Aufnehmermeßkopf integriert sind und daher ein Verbindungskabel von der Aufnehmerspule zu dem Oszillatorschwingkreis entfällt. Dieses bekannte Verfahren ist jedoch relativ zeitaufwendig und es kann durch Ein-/ Auslöten von Bauelementen aus der Schaltung zur mechanischen Beschädigung der Schaltung kommen, insbesondere wenn Schaltungen in Hybridtechnik eingesetzt werden.

Aus der US-A-3 922 599 ist ein Verfahren zum Abgleich eines nach dem Wirbelstrom-Meßverfahren arbeitenden Aufnehmers bekannt. Bei dem bekannten Aufnehmer ist um einen Weicheisenkern eine Spule angeordnet, die mit einer Oszillatorschaltung in Verbindung steht und mit einem hochfrequenten Wechselstrom gespeist wird. Der Abgleich dieser Meßkette erfolgt hierbei durch Veränderung der Vormagnetisierung des Weicheisenkerns der Spule.

Aufgabe der Erfindung ist es daher, einen verbesserten Abgleich einer Wegaufnehmer-Meßkette nach dem Wirbelstrom-Meßverfahren schnell und einfach zu erzielen.

Diese Aufgabe wird erfindungsgemäß dadurch gelöst, daß in das Streufeld der kernlosen Aufnehmerspule ein leitfähiges Material eingebracht und zwecks Abgleich die räumliche Zuordnung des leitfähigen Materials zur Aufnehmerspule veränderbar ist.

Durch dieses Verfahren kann ein verbesserter Abgleich einer Wegaufnehmer-Meßkette nach dem Wirbelstrom-Meßverfahren erzielt werden.

Durch das Einbringen eines leitfähigen Materials in das Streufeld der Aufnehmerspule werden in dem leitfähigen Material Wirbelströme induziert, die wiederum eine elektrische Bedämpfung der Spule bewirken. Da die Aufnehmerspule ein Bauelement des Schwingkreises darstellt, bewirkt die elektrische Bedämpfung der Spule eine Änderung der Linearität und Empfindlichkeit der Wegmeßkette. In einer bestimmten Anordnung des leitfähigen Materials zur Aufnehmerspule erzielt man daher einen optimalen Abgleich bezüglich Linearität und Empfindlichkeit der Wegaufnehmer-Meßkette nach dem Wirbelstrom-Meßverfahren. In dieser optimalen Position wird das leitfähige Material, welches eine beliebige Form aufweisen kann, dann fixiert.

Gemäß einer bevorzugten Ausbildung des Erfindungsgedankens ist vorgesehen, daß in das Streufeld der Aufnehmerspule auf der dem Meßobjekt abgewandten Seite ein leitfähiges Material eingebracht wird. Das leitfähige Material kann durch diese Ausbildung nicht sichtbar im Aufnehmerkopf fixiert werden.

Zur Lösung der Aufgabe ist eine Vorrichtung vorgesehen, die dadurch gekennzeichnet ist, daß die Aufnehmerspule als kernlose Aufnehmerspule ausgebildet ist und daß im Bereich des Streufeldes der kernlosen Spule ein leitfähiges Material angeordnet wird und zwecks Abgleich die räumliche Zuordnung des leitfähigen Materials zur Aufnehmerspule veränderbar ist.

In Weiterbildung des Erfindungsgedankens ist vorgesehen, daß das leitfähige Material als rechtwinkliges Winkelblech vorgesehen ist. Durch diese Ausbildung kann der Abgleich derart durchgeführt werden, daß das Winkelblech zunächst nur grob in entsprechend optimalem Abstand zur Aufnehmerspule gebracht und fixiert wird. Der Feinabgleich der Wegaufnehmer-Meßkette erfolgt anschließend durch Biegen oder Verdrehen des freistehenden Schenkels des Winkelbleches in Richtung der Aufnehmerspule oder weiter davon entfernt.

Weiterhin ist vorgesehen, daß das Winkelblech auf einem Keramikplättchen befestigt wird, wobei das Keramikplättchen im Kern der Spule befestigt ist. Hierdurch kann das Winkelblech sehr einfach in beliebigem Abstand zur Aufnehmerspule auf das flache Keramikplättchen aufgeklebt werden.

Gemäß einer besonders bevorzugten Ausgestaltung des Erfindungsgedankens ist vorgesehen, daß das leitfähige Material als Hülse ausgebildet ist, welche entlang des Keramikplättchens in Richtung Aufnehmerspule verschoben werden kann. Durch diese Ausgestaltung können die Bauelemente des Oszillators auf dem Keramikplättchen, welches nun als Basisträgerplatte für die Bauelemente dient, angeordnet werden. Die Hülse dient als Abschirmung für die Bauelemente des Oszillators und gleichzeitig zur Stabilisierung des Aufnehmerkopfes. Bei dieser Ausgestaltung kann an den Aufnehmerkopf ein direkter Anschluß von Signalkabeln erfolgen. Die Signalkabel können jederzeit ausgetauscht werden, ohne daß die Wegaufnehmer-Meßkette neu abgeglichen werden muß.

Weiterhin ist vorgesehen, daß das leitfähige Material in einem entsprechenden Abstand zur Aufnehmerspule in Epoxydharz gegossen wird. Durch diese Ausgestaltung wird ein dauerhafter Halt und eine Stabilisierung des Aufnehmerkopfes und der Lage des leitfähigen Materials zur Aufnehmerspule gewährleistet.

Die Erfindung wird nachfolgend an zwei Ausführungen näher erläutert, die in den Zeichnungen dargestellt sind. Es zeigen:
- Fig. 1:: eine Ausführungsform der erfindungsgemäßen Vorrichtung, bei der das leitfähige Material als rechtwinkliges Winkelblech ausgebildet ist,
- Fig. 2:: eine weitere Ausführungsform, bei der das leitfähige Material als Hülse ausgebildet ist.

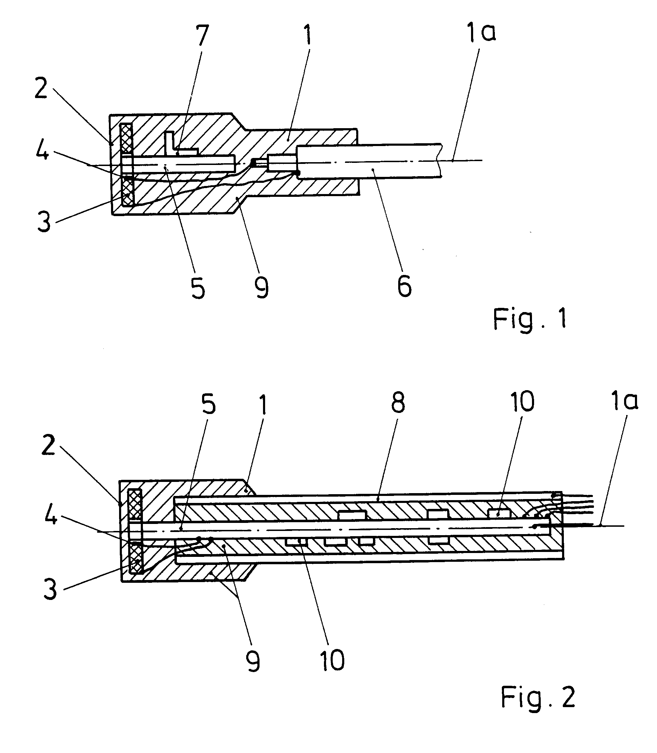

In Fig. 1 ist ein Aufnehmerkopf 1 einer Wegaufnehmer-Meßkette nach dem Wirbelstrom-Meßverfahren dargestellt. Der Aufnehmerkopf 1 weist eine Längsachse 1a auf. In dem Aufnehmerkopf 1 ist an der dem Meßobjekt zugewandten Seite 2 eine ringförmige Aufnehmerspule 3 derart angeordnet, daß sich die Längsachse 1a des Aufnehmerkopfes 1 mit der Längsachse der Aufnehmerspule 3 deckt. In der zylinderförmigen Bohrung 4 der Aufnehmerspule 3 ist ein schmales, rechteckiges Keramikplättchen 5 festgeklemmt, welches entlang der Längsachse 1a ins Innere des Aufnehmerkopfes ragt. Die Aufnehmerspule 3 ist elektrisch mit einem Koaxialkabel 6 verbunden. Die Aufnehmerspule 3 und das Koaxialkabel 6 bilden selbst einen Teil des Schwingkreises. Das Koaxialkabel 6, welches nur im Anfangsbereich auf der dem Meßobjekt abgewandten Seite im Aufnehmerkopf integriert ist, verbindet den Aufnehmerkopf 1 mit dem eigentlichen Oszillator und einer entsprechend nachgeschalteten Auswerteelektronik, welche in einem bestimmten Abstand vom Aufnehmerkopf in einem separaten Gehäuse angeordnet ist.

Der erfindungsgemäße Abgleich wird derart vorgenommen, daß ein rechtwinkliger Metallwinkel 7 in das Streufeld der Aufnehmerspule 3 eingebracht wird. In dem Metallwinkel 7 werden somit abstandsabhängig Wirbelströme induziert, die auf die Aufnehmerspule 3 rückwirken und die Impedanz der Aufnehmerspule 3 verringern. Die durch die Wirbelströme verursachten Verluste wirken derart auf den Schwingkreis zurück, daß die Linearität und die Empfindlichkeit der Wegaufnehmer-Meßkette verändert werden. In einer bestimmten Anordnung des Metallwinkels 7 zur Aufnehmerspule 3 erhält man die gewünschte Linearität und Empfindlichkeit der Wegaufnehmer-Meßkette. Der Metallwinkel 7 wird in diesem Abstand zur Aufnehmerspule 3 durch Aufkleben des einen Schenkels auf das Keramikplättchen 5 fixiert. Nachdem der Metallwinkel 7 auf dem Keramikplättchen 5 fixiert ist, kann ein Feinabgleich der Wegaufnehmer-Meßkette durch Verbiegen des freistehenden Schenkels des Metallwinkels 7 erfolgen. Nach erfolgtem Abgleich werden die Aufnehmerspule 3, das Keramikplättchen 5 mit aufgeklebtem Metallwinkel 7 und der Anfangsbereich des Koaxialkabels 6 in der vordem beschriebenen Position zueinander in einer Form, die beliebig ausgebildet sein kann, in Epoxydharz 9 vergossen.

In Fig. 2 ist ebenfalls ein Aufnehmerkopf 1 einer Wegaufnehmer-Meßkette nach dem Wirbelstrom-Meßverfahren dargestellt. Gemäß Fig. 1 ist auf der dem Meßobjekt zugewandten Seite 2 des Aufnehmerkopfes 1 eine ringförmige Spule 3 angeordnet. Wie bei Fig. 1 schon erläutert, ist ein Keramikplättchen 5 in der zylindrischen Bohrung der Aufnehmerspule 3 festgeklemmt und ragt in das Innere des Aufnehmerkopfes 1. Bei dieser Ausgestaltung nach Fig. 2 sind alle Bauelemente 10 des Oszillators und der Auswerteelektronik auf dem Keramikplättchen 5 angeordnet und untereinander entsprechend elektrisch verbunden. Die Aufnehmerspule 3, die einen Teil des Schwingkreises bildet, ist elektrisch mit dem Keramikplättchen und den darauf angeordneten Bauelementen 10 verbunden.

Der Abgleich der Wegaufnehmer-Meßkette erfolgt hier durch Verschieben einer Metallhülse 8, deren Längsachse mit der Längsachse 1a des Aufnehmerkopfes 1 zusammenfällt. Nach erfolgtem Abgleich wird die Hülse 8 in dem bestimmten Abstand zur Aufnehmerspule 3 durch Verkleben mit dem Keramikplättchen 5, welches sich im Inneren der Hülse 8 befindet, fixiert. Wie bereits beschrieben, werden die Aufnehmerspule 3 mit dem Keramikplättchen 5 und der Hülse in einer Form mit Epoxydharz 9 vergossen. Die Form ist derart ausgebildet, daß nur ein der Aufnehmerspule 3 nächster Bereich der Hülse 8 in Epoxydharz 9 vergossen wird. Das Innere der Hülse 8 wird vollständig in Epoxydharz 9 vergossen. Bei dieser Ausgestaltung des Aufnehmerkopfes 1 kann an den Aufnehmerkopf 1 direkt ein Signalkabel angeschlossen werden, da alle Elemente der Wegaufnehmer-Meßkette im Aufnehmerkopf integriert sind.
Der erfindungsgemäße Abgleich kann auch durch Beschichten des Keramikplättchens 5 mit einem leitfähigen Material und anschließendem Wegfräsen der Beschichtung erfolgen.

## Patentansprüche

1. Verfahren zum Abgleich einer Wegaufnehmer-Meßkette nach dem Wirbelstrom-Meßverfahren, dadurch gekennzeichnet, daß in das Streufeld der kernlosen Aufnehmerspule (3) ein leitfähiges Material (7, 8) eingebracht wird, und zwecks Abgleich die räumliche Zuordnung des leitfähigen Materials zur Aufnehmerspule (3) verändert wird.

2. Verfahren nach Anspruch 1, dadurch gekennzeichnet, daß in das Streufeld der Aufnehmerspule (3) auf der dem Meßobjekt abgewandten Seite ein leitfähiges Material (7, 8) eingebracht wird.

3. Vorrichtung zum Abgleich einer Wegaufnehmer-Meßkette nach dem Wirbelstrom-Meßverfahren, bestehend aus einer in einem Aufnehmerkopf befindlichen Aufnehmerspule, die von einer Oszillatorschaltung mit Wechselstrom gespeist wird, wobei die Aufnehmerspule ein Bauelement der Oszillatorschaltung darstellt, dadurch gekennzeichnet, daß die Aufnehmerspule als kernlose Aufnehmerspule ausgebildet ist, und daß im Bereich des Streufeldes der Aufnehmerspule (3) ein leitfähiges Material (7, 8) angeordnet wird und zwecks Abgleich die räumliche Zuordnung des leitfähigen Materials zur Aufnehmerspule (3) veränderbar ist.

4. Vorrichtung nach Anspruch 3, dadurch gekennzeichnet, daß das leitfähige Material als Winkelblech (7) ausgebildet ist.

5. Vorrichtung nach Anspruch 3 oder 4, dadurch gekennzeichnet, daß das leitfähige Material (7, 8) auf einem Keramikplättchen (5) befestigt wird, wobei das Keramikplättchen (5) im der Aufnehmerspule (3) befestigt ist.

6. Vorrichtung nach Anspruch 3, dadurch gekennzeichnet, daß das leitfähige Material als Hülse (8) ausgebildet ist.

7. Vorrichtung nach einem der vorhergehenden Ansprüche, dadurch gekennzeichnet, daß das leitfähige Material (7, 8) in der räumlichen Zuordnung zur Aufnehmerspule (3), in der die Wegaufnehmer-Meßkette abgeglichen ist, zusammen mit der Aufnehmerspule (3) in Epoxydharz (9) vergossen ist.

## Claims

1. Method for adjusting a displacement transducer measurement chain according to the eddy-current measuring method, characterised in that a conductive material (7, 8) is introduced into the leakage field of the coreless transducer coil (3), and the spatial association between the conductive material and the transducer coil (3) is changed for the purpose of adjustment.

2. Method according to claim 1, characterised in that a conductive material (7, 8) is introduced into the leakage field of the transducer coil (3) on the side which is distant from the object of measurement.

3. Device for adjusting a displacement transducer measurement chain according to the eddy-current measuring method, consisting of a transducer coil which is disposed in a transducer head and supplied with alternating current by an oscillator circuit, the transducer coil representing a component of the oscillator circuit, characterised in that the transducer coil is formed as a coreless transducer coil, and that a conductive material (7, 8) is arranged in the area of the leakage field of the transducer coil (3) and the spatial association between the conductive material and the transducer coil (3) can be changed for the purpose of adjustment.

4. Device according to claim 3, characterised in that the conductive material is formed as an angle plate (7).

5. Device according to claim 3 or 4, characterised in that the conductive material (7, 8) is secured to a ceramic lamina (5), the ceramic lamina (5) being secured in the transducer coil (3).

6. Device according to claim 3, characterised in that the conductive material is formed as a sleeve (8).

7. Device according to ore of the preceding claims, characterised in that the conductive material (7, 8) is potted together with the transducer coil (3) in epoxy resin (9) in the spatial association with the transducer coil (3) in which the displacement transducer measurement chain is adjusted.

## Revendications

1. Procédé de réglage d'un transducteur de déplacement par le procédé utilisant les courants de Foucault, caractérisé en ce que on introduit un matériau conducteur (7, 8) dans le champ de fuite d'une bobine de capteur sans noyau (3), et en vue du réglage, on fait varier la disposition spatiale du matériau métallique par rapport à la bobine (3).

2. Procédé selon la revendication 1, caractérisé en ce qu'on introduit un matériau conducteur (7, 8) dans le champ de fuite de la bobine de capteur (3) sur le côté faisant face à l'objet à mesurer.

3. Dispositif de réglage d'un transducteur de déplacement par le procédé utilisant les courants de Foucault, se composant d'une bobine de capteur se trouvant dans une tête de capteur, qui est alimentée en courant alternatif par un oscillateur, la bobine représentant une composante de l'oscillateur, caractérisé en ce que la bobine est constituée d'une bobine sans noyau, que l'on place dans le champ de fuite de la bobine (3) un matériau conducteur (7, 8), et en vue du réglage, on peut faire varier la disposition spatiale du matériau conducteur par rapport à la bobine (3).

4. Dispositif selon la revendication 3, caractérisé en ce que le matériau conducteur (7, 8) est sous forme d'une cornière (7).

5. Dispositif selon la revendication 3 ou 4, caractérisé en ce que le matériau conducteur (7, 8) est fixé sur une plaquette de céramique (5) laquelle est fixée dans la bobine (3).

6. Dispositif selon la revendication 2, caractérisé en ce que le matériau conducteur est sous forme d'une douille (8).

7. Dispositif selon l'une des revendications précédentes, caractérisé en ce que le matériau conducteur (7, 8) dans la disposition spatiale par rapport à la bobine, dans laquelle le transducteur de déplacement se trouve réglé, est noyé dans de la résine époxy (9).
